Europäisches Patentamt

European Patent Office

Office européen des brevets

(19)

(11) Publication number: **0 152 159**
**A1**

(12) # EUROPEAN PATENT APPLICATION

(21) Application number: **85300023.0**

(22) Date of filing: **03.01.85**

(51) Int. Cl.⁴: **B 60 P 1/64**

(30) Priority: **12.01.84 GB 8400769**

(43) Date of publication of application:
**21.08.85 Bulletin 85/34**

(84) Designated Contracting States:
**BE DE FR IT NL SE**

(71) Applicant: **T.T. BOUGHTON & SONS LIMITED**
**Bell Lane**
**Amersham Bucks HP6 6PE(GB)**

(72) Inventor: **Boughton, Thomas Trafford**
**T.T. Boughton Sons Ltd Bell Lane**
**Amersham Bucks. HP6 6PE(GB)**

(74) Representative: **Kirby, Harold Douglas Benson et al,**
**G.F. Redfern & Company Marlborough Lodge 14**
**Farncombe Road**
**Worthing West Sussex BN11 2BT(GB)**

(54) Improvements in or relating to load carrying vehicles.

(57) A vehicle is provided with hydraulic mechanism (1,2,3,4) capable of loading a transport frame (6) having at the front end thereof an upstanding member (5) for cooperation with the hydraulic mechanism (1,2,3,4). The transport frame (6) is provided with anchor members (10) which cooperate with hooks (26) and latches (30) to lock the transport frame (6) direct to the main chassis members (7) of the vehicle. The transport frame is also provided with three platforms (51,52 & 53). The platform (51) supports a hydraulically-operated which (60), the platform (52) supports trunnions (54 & 55) on which a crane jib is pivotally mounted, and the platform (53) carries a hydraulic jack (63) supporting the crane jib. A wire rope (59) extends from the winch (60) to a hook (62). When the transport frame (60) is loaded on to, and locked to, the vehicle, the vehicle can be used to tow a disabled vehicle capable of being lifted by the hook (62).

Fig. 2

**0152159**

## IMPROVEMENTS IN OR RELATING TO LOAD CARRYING ROAD VEHICLES

This invention relates to load carrying road vehicles of the kind provided with a transport frame and means for hoisting the frame on to the vehicle and off-loading it from the vehicle.

Various systems are known for hoisting transport frames on to vehicles, and one such known system is illustrated in Figure 1 of Patent Application No. 82 36344 (Publication No. 2 112 358). This particular system includes a lifting arm pivotally mounted on the vehicle and carrying at its free end a hook adapted to engage an upstanding member at the forward end of the transport frame.

Another system has been proposed in which the upstanding member at the forward end of the transport frame is omitted. In this case the lifting arm includes a telescopic member which carries the hook at its free end. With this arrangement the telescopic member can be extended to enable the hook to engage the forward end of the transport frame, even though it is located at ground level.

It is to be understood that the invention is particularly concerned with load carrying road vehicles of the general kinds referred to in the two preceding paragraphs, but it is also applicable to other types of vehicle in which the transport frame is lifted on to the vehicle by means other than those previously referred to.

It is an object of the present invention to increase the versatility of a load-carrying vehicle of the kind referred to. In particular it is an object of the invention to enable the vehicle to be converted from a load-carrying vehicle into a recovery vehicle.

From one aspect the invention consists in a vehicle comprising a frame, means for moving said frame on and off said vehicle over the end of said vehicle, means for locking said frame in position on said vehicle and lifting means mounted on said frame for lifting a load located at the rear of said vehicle.

Preferably said lifting means include a jib projecting rearwardly from the frame, and a hook suspended from the free end of said jib. The hook is capable of being raised and lowered, and may be used in particular to engage the front end of a disabled vehicle and raise it from the ground so that the disabled vehicle can be towed by the vehicle to which the frame is fitted.

Preferably the lifting means also include a power-operated winch, for example a hydraulic winch, and a wire rope or the like coupling the hook to the winch. Preferably the arrangement is such that the winch can be driven from a hydraulic system forming part of the vehicle carrying the frame.

Preferably the jib is pivotally mounted on the frame, and means are provided for raising and lowering the free end of the jib. These means may comprise, for example, a telescopic prop or a hydraulic cylinder and ram. It is to be understood that the frame carrying the lifting means will be generally similar to the transport frames normally carried by the vehicle. Thus, for example, if the transport frame is provided with an upstanding member at its forward end, the frame with the lifting means will be provided with a similar upstanding member at its forward end.

When the vehicle is to be used as a load-carrying vehicle, the load will normally be secured to the transport frame when the latter is located at ground level. The vehicle will be reversed towards the forward end of the transport frame and the frame will then be lifted by the hoisting means on the vehicle over the rear end of the vehicle. Once the frame has been lifted on to the vehicle it will be locked to the vehicle so that the load can be transported safely. Similarly, when the vehicle is to be used as a recovery vehicle, a special frame will be used in place of the normal load-carrying frame.    This special frame will be provided with the lifting means already referred to and will be mounted on the vehicle in the same manner as described for the transport frame.

When the special frame has been fitted to the vehicle, the vehicle with the frame can be reversed towards the forward end of a disabled vehicle until the hook is located in a position for fitting it to the front end of the disabled vehicle.    The winch will then be operated to raise the front wheels of the disabled vehicle off the ground so that the disabled vehicle can be towed away.

From another aspect the invention consists in a frame capable of being hoisted on to, and removed from, a vehicle, said frame having lifting means mounted thereon for lifting a load located at the rear of the vehicle.

One embodiment of the invention will now be described with reference to the accompanying diagrammatic drawings in which:

Figure 1 is a perspective view of a vehicle in accordance with the invention, with a transport frame being loaded on to the vehicle;

Figure 2 is a side view of a vehicle in accordance with the invention, with the transport frame on the ground behind the vehicle;

Figure 3 is a side view of the vehicle illustrated in Figure 2, with the frame partially loaded on to the vehicle;

Figure 4 is a side view of the vehicle illustrated in Figures 2 and 3, with the transport frame in the transport position;

Figure 5 is a perspective view of a transport frame in accordance with the invention;

Figure 6 is a scrap section on the line 6-6 shown in Figure 5 looking in the direction of the arrows;

Figure 7 is a perspective view of one of the hooks for retaining the transport frame in position on the vehicle;

Figure 8 is a side view of the hook shown in Figure 7, indicating the inter-engagement of the hook and part of the transport frame; and

Figure 9 is a plan view of the hook illustrated in Figures 7 and 8.

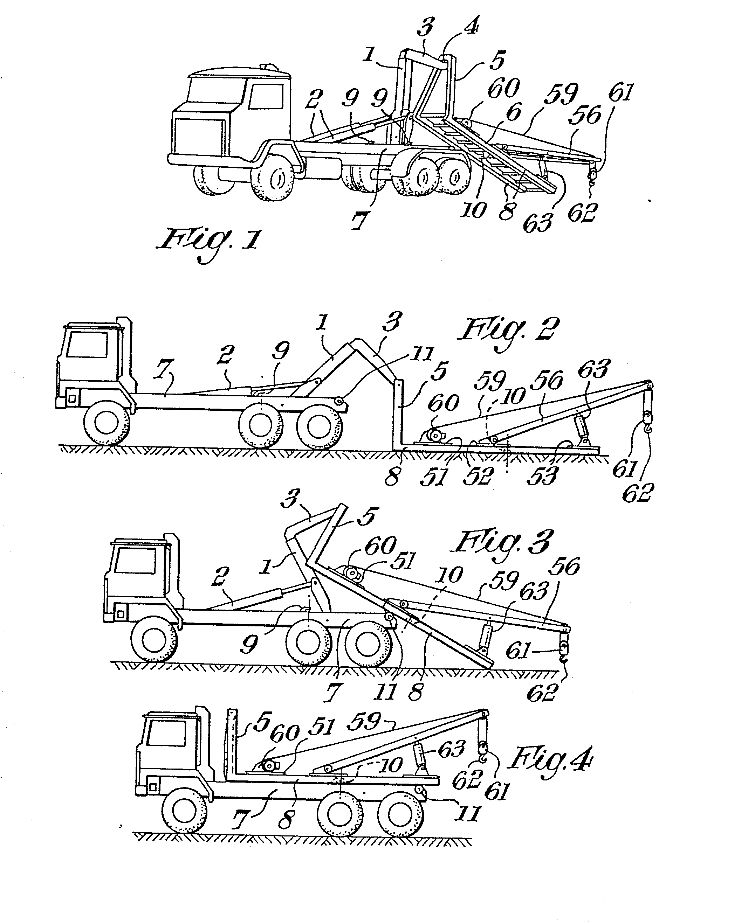

The vehicle illustrated in Figure 1 includes a lifting arm 1 pivotally mounted on the vehicle and controlled by a pair of hydraulic cylinders 2. The lifting arm includes a forward member which is telescopically slideable therein under the control of a further hydraulic cylinder within the lifting arm. The forward member includes a jib 3, the free end of which is provided with a hook 4 designed to engage a bar located near the top of an upstanding member 5 forming part of a transport frame 6. The vehicle includes main longitudinal chassis members 7, and the frame 6 includes main longitudinal members 8. Rollers 11 are provided at the rear end of the chassis to engage the two longitudinal members 8.

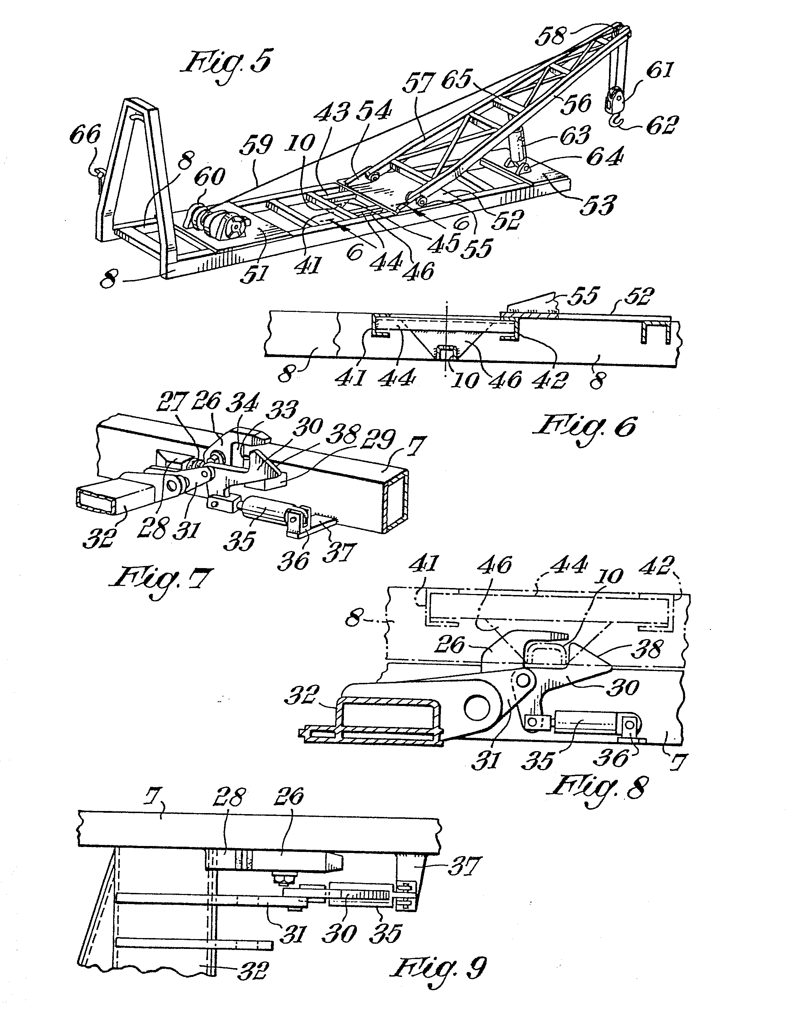

When the frame 6 is to be loaded on to the vehicle, the vehicle is reversed into the position shown in Figure 2 so that the rear of the vehicle is close to the upstanding member 5 of the frame. The hydraulic control system is operated to rotate the lifting arm 1 to enable the hook 4 to engage the arm on the upstanding member 5. Under these conditions, the jib 3 is in its innermost position as illustrated in Figures 1, 2 and 3. The hydraulic control system is then used to rotate the lifting arm 1 anticlockwise as seen in Figures 1, 2 and 3 so that the transport frame 6 is drawn over the rear of the vehicle and moves forwardly on the rollers 11 as shown in Figure 3. When the lifting arm 1 reaches the horizontal position, the jib 3 is extended from the lifting arm by the further hydraulic control cylinder so that the frame is moved into its transport position shown in Figure 4 with the upstanding member 5 located close to the rear of the vehicle cab.

In accordance with the invention, locking means are provided to lock the frame 6 to the main longitudinal chassis members 7, and lifting means are mounted on the frame for lifting a load located at the rear of the vehicle.

Referring particularly to Figure 5 it will be seen that three platforms 51, 52 and 53 are welded to the main longitudinal frame members 8. Fixed to the first platform 51 is a hydraulically operated winch 60. Fixed to the second platform 52 are two trunnions 54 and 55 on which are pivotally mounted the main side members 56 and 57 of a crane jib. The two side members 56 and 57 are connected by a plurality of transverse and diagonal bracing members and at the forward end of the jib a pair of pulleys 58 are rotatably mounted. A wire rope 59 extends from the winch 60 over one of the pulleys 58. The wire rope then passes around one of a pair of pulleys rotatably mounted in a block 61. Thereafter the rope passes around the other pulley 58, around the other pulley in the block 61 and the end is finally attached to the jib. The block 61 is provided with a hook 62 which can be used to engage the front end of a disabled vehicle.

The cylinder of a hydraulic jack 63 is pivotally mounted in trunnions 64 secured to the third platform 53. The piston rod of the jack is pivotally connected to one of the transverse members 64 of the jib. Thus this hydraulic jack can be used to raise and lower the jib about the pivot axis located in the two trunnions 54 and 55. The winch 60 and the jack 63 are connected by hydraulic piping to a pair of quick release couplings 66 mounted on the upstanding member 5 at the front of the frame.

As can be seen from Figures 5 and 6, two anchor members 10 are provided at the approximate centre of the fore-and-aft length of the transport frame 6. The frame 6 includes two transverse members 41 and 42, and two longitudinal members 43 and 44 are welded between these two transverse members. Plates 45 and 46 depend from the longitudinal members 43 and 44 and the actual anchor members 10 are welded between the respective plates 45 and 46 and the adjacent main longitudinal members 8. The anchor members 10 cooperate with hooks which are illustrated in Figures 7, 8 and 9.

The hook 26 is pivotally mounted on one of the longitudinal chassis members 7. Rotation of the hook in a clockwise direction, as seen in Figures 7 and 8, is limited by rubber blocks 27 provided between the front face of the lower part of the hook 26 and a stop member 28 welded to the side of the chassis member 7. Anticlockwise movement of the hook is limited by similar rubber blocks (not visible in Figure 7) located between the rear face of the lower part of the hook and a further stop 29 welded to the side of the chassis member 7. The hook 26 cooperates with the respective one of the anchor members 10 to prevent forward and upward movement of the frame relative to the chassis members.

To prevent rearward motion of the transport frame relative to the vehicle, a pivotally-mounted latch 30 is provided in association with each of the longitudinal members 7. Each of the latches 30 is pivotally mounted on a support arm 31 which is secured to one of the transverse members 32 of the vehicle chassis. The latch 30 has a substantially vertical locking surface 33 located, when the latch is in the locked position (as indicated in the drawings), substantially in the plane of the open end of the respective hook 26. When the latch is in this condition, the respective anchor member 10 is trapped between the vertical face 33 and the vertical face 34 of the hook 26.

The latch 30 is moved into the locking position as shown by a spring located in a pneumatic cylinder 35. The pneumatic cylinder is pivotally mounted in a trunnion 36 secured to a support 37, itself secured to the longitudinal member 7. The pneumatic cylinder includes a piston which is pulled into the cylinder by means of the spring so that the latch is urged in an anticlockwise direction about its pivot axis, as seen in Figures 7 and 8. Each latch 30 is provided with an inclined rearward face 38 so that, when the transport frame 6 is being moved forwardly on the chassis member 7, the anchors 10 will rotate the respective latches in a clockwise direction as seen in Figures 7 ·and 8 against the action of the springs. This clockwise rotation will enable the anchor members to pass over the latches and, when the anchor members are completely within the hooks, the latches will be returned to the locking positions by their respective springs. When the transport frame is to be off-loaded from the vehicle, air is introduced into the cylinders 35 to rotate the latches in a clockwise direction against the action of the springs. This will then enable the transport frame 6 to be moved rearwardly by the hydraulic system without interference from the latches.

It is to be understood that, when the vehicle is to be used as a recovery vehicle, the special transport frame as hereinbefore described and illustrated will be lifted on to the vehicle and locked into the position shown in Figure 4 by means of cooperation between the anchor members 10 and the hooks 26 and the latches 30. The winch 60 and the jack 63 will then be connected to the hydraulic system of the recovery vehicle by means of the quick-release coupling 66. The recovery vehicle will then be reversed towards the disabled vehicle. The hook 62 will then be lowered by operation of the winch 60, and if necessary the jack 63, until the hook can be engaged in the front end of the disabled vehicle. The front end of the vehicle will then be lifted, again by operation of the hydraulic winch 60 and if necessary the hydraulic jack 63. Thereafter the recovery vehicle can be driven forwardly in the normal way towing the disabled vehicle. When the disabled vehicle has been taken to the required site for repair, the front end can be lowered to the ground by operation of the hydraulic system as required. The arrangement described enables a single vehicle to be used both for carrying loads on normal transport frames and as a recovery vehicle with the help of the special transport frame hereinbefore described.

Although the chassis of the vehicle is not shown in detail, it can be seen from Figures 1 to 4 that the lifting arm 1 and the cylinders 2 are pivotally mounted direct on the main chassis members 7. It will therefore be understood that the transverse members between the longitudinal members 7 are suitably shaped to enable the lifting arm 1 and the cylinders 2 to be accommodated between the longitudinal members 7 when the lifting arm 1 has been rotated anticlockwise into the position shown in Figure 4 in which the lifting arm 1 is horizontal.

A vehicle in accordance with the invention would have the advantage that it could be converted within a very short space of time from a load-carrying vehicle into a recovery vehicle, and vice versa. This would greatly increase the versatility of the vehicle and would save having to dedicate a special lorry for recovery purposes. In particular the vehicle could form part of a fleet of similar vehicles, all provided with removable containers adapted to carry rubbish, and could be arranged so that the rubbish container was capable of being replaced by the frame having the lifting means mounted thereon to enable that vehicle to recover any other vehicle in the fleet that had become disabled.

A vehicle in accordance with the invention may be very cost-effective since the hydraulic system required for the winch normally exists already in the prime mover, and all that is required is a diverter valve and the necessary pipework to energise the winch, and possibly also the hydraulic cylinder for lifting the jib.

0152159

CLAIMS

1.    A vehicle comprising a transport frame, means for moving said frame on and off said vehicle over the end of said vehicle, means for locking said frame in position on said vehicle and lifting means mounted on said frame for lifting a load located at the rear of said vehicle.

2.    A vehicle as claimed in Claim 1, wherein said lifting means include a jib projecting rearwardly from the frame and a hook suspended from the free end of the jib.

3.    A vehicle as claimed in Claim 2, wherein the lifting means also include a power-operated winch and a wire rope coupling the hook to the winch.

4.    A vehicle as claimed in Claim 3, wherein the winch is hydraulically operated, and wherein means are provided to couple the winch to the hydraulic system of the vehicle.

5.    A vehicle as claimed in Claim 2, wherein the jib is pivotally mounted on the frame, and means are provided for raising and lowering the free end of the jib.

6.    A vehicle as claimed in Claim 5, wherein the means for raising and lowering the jib comprise a hydraulic cylinder and ram, and wherein means are provided to couple the hydraulic cylinder to the hydraulic system of the vehicle.

7.    A vehicle as claimed in Claim 1, wherein said locking means comprise a plurality of anchor members on the transport frame and associated hooks and latches on the chassis of the vehicle.

8.    A vehicle as claimed in Claim 7, wherein each of said latches is pivotally mounted and urged by a spring into a position for locking the respective anchor member within the respective hook.

9.    A vehicle as claimed in Claim 8, wherein each latch is controlled by a pneumatic cylinder so that it can be opened to allow the transport frame to be removed from the vehicle.

10.    A vehicle as claimed in Claim 9, wherein each of said latches is provided with an inclined rearward face adapted to rotate the latch against the action of the respective spring when contacted by the respective anchor member during loading of the transport frame on to the vehicle.

11.    A transport frame capable of being hoisted on to, and removed from, a vehicle, said frame having lifting means mounted thereon for lifting a load located at the rear of the vehicle.

**0152159**

1/2

Fig. 1

Fig. 2

Fig. 3

Fig. 4

2/2

0152159

Fig. 5

Fig. 6

Fig. 7

Fig. 8

Fig. 9

## European Patent Office

# EUROPEAN SEARCH REPORT

EP 85 30 0023

## DOCUMENTS CONSIDERED TO BE RELEVANT

| Category | Citation of document with indication where appropriate, of relevant passages | Relevant to claim | CLASSIFICATION OF THE APPLICATION (Int Cl 4) |
|---|---|---|---|
| X | US-A-3 987 918 (COROMPT) <br><br> * Entire document * <br><br> --- | 1-3,5-7,11 | B 60 P 1/64 |
| D,X | GB-A-2 112 358 (BOUGHTON AND SONS) <br> * Figures 1-6 * <br><br> --- | 1,7-10 | |
| A | DE-A-3 040 637 (BOCK) <br><br> ----- | | |

| | TECHNICAL FIELDS SEARCHED (Int. Cl.4) |
|---|---|
| | B 60 P 1/00 |

The present search report has been drawn up for all claims

| Place of search | Date of completion of the search | Examiner |
|---|---|---|
| BERLIN | 12-04-1985 | LUDWIG H J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82